# EUROPEAN PATENT SPECIFICATION

(11) **EP 4 056 395 B1**
(45) Date of publication and mention of the grant of the patent: **01.05.2024**
(21) Application number: 21193598.6
(22) Date of filing: 27.08.2021
(51) Int. Cl.: B60J 7/16, B60J 7/19

(54) **SUNROOF HAVING FIXABLE OPENING ANGLE**
SONNENDACH MIT FIXIERBAREM ÖFFNUNGSWINKEL
TOIT OUVRANT DOTÉ D'UN ANGLE D'OUVERTURE POUVANT ÊTRE FIXÉ

(30) Priority: 08.03.2021 CN 202110249747
(43) Date of publication of application: 14.09.2022
(73) Proprietor: Jiangsu Sanjo Intelligent Technology Co., Ltd., Nandu Town Liyang City, Jiangsu 21330 (CN)
(72) Inventor: XIAO, Heping, Liyang City Jiangsu (CN)
(74) Representative: karo IP

(56) References cited:
- EP-A1- 2 583 849
- EP-A1- 2 762 643
- DE-U1- 20 316 827
- DE-U1-202007 011 931

## Description

The present disclosure relates to a sunroof structure, and more particularly, to a sunroof having a fixable opening angle.

A sunroof has functions of lighting, sunshading, heat preservation, ventilation, air exchange, etc., and can be used as an escape passage in case of emergency. Domestic sunroof products dedicated to recreational vehicles are countable. At present, most sunroofs used in the recreational vehicles are transformed from other products such as fan access panels and building sunroofs. Compared with the special recreational vehicle sunroofs, these sunroofs have incomplete functions, unreasonable structure, poor appearance, loud noise in running, etc. Some domestic recreational vehicle manufacturers also adopt imported special recreational vehicle sunroof products, which meet demands for the product to some extent, but cause the increase of the overall cost of the recreational vehicle due to their high price.

In the prior art, a recreational vehicle sunroof is disclosed in a Chinese patent with an application number of 201621426174.5, which includes a transparent sunroof cover, a sunroof external window, and a sunroof internal window, wherein the transparent sunroof cover is located above the sunroof external window and is hinged to the sunroof external window, the sunroof external window is located on an outer side of a recreational vehicle roof, the sunroof internal window is located on an inner side the recreational vehicle roof and is fixedly mounted on an inner surface of the recreational vehicle roof, the sunroof external window is connected with the sunroof internal window via a fixing member, a mounting groove with a notch is provided on a frame of the sunroof internal window, and an illuminating lamp is mounted in the mounting groove. A lining plate is mounted in the transparent sunroof cover, a pneumatic pressure rod is mounted between the lining plate and the sunroof external window, one end of the pneumatic pressure rod is hinged to the lining plate, the other end of the pneumatic pressure rod is hinged to the sunroof external window, and the pneumatic pressure rod serves as a support.

In the prior art, a recreational vehicle sunroof is also disclosed in a Chinese patent with an application number of 201920112734.7, which includes an ultraviolet glass top cover, a pneumatic pressure supporting rod, and a base, wherein the ultraviolet glass top cover is hinged to a left side of the base, a top end of the pneumatic pressure supporting rod is hinged to a right side of the ultraviolet glass top cover, a bottom end of the pneumatic pressure supporting rod is hinged to a top left side of the base, rolling mechanisms are fixed at both left and right sides of a bottom of an inner cavity of the base, the two rolling mechanisms are symmetrically arranged, each of the rolling mechanisms includes two side plates, and the pneumatic pressure supporting rod serves as a support for the recreational vehicle sunroof.

German Utility Model DE 203 16 827 U1 discloses roof hood device for caravans or the like, in which a hood articulated on a frame on the caravan side can be set up in a fixed manner in different positions and locked in the closed position by means of an approximately U-shaped bracket articulated on the hood and guided by lateral elements on the frame on the caravan side. A web of the U-shaped bracket is a handle rod which is mounted rotatably on the bracket legs and wherein a locking element is fastened on an outer end of its bearing shaft, which end is accommodated in a slot guide. In a closed position of the hood, it can be pivoted via the rod, which can be rotated to a limited extent, into a hood-side mating element in order to secure the hood.

The recreational sunroofs in the prior art are complicated in structure and inconvenient to install and maintain.

Based thereon, it is an object of the present invention to at least partially solve the problems described with reference to the prior art.

This object solved by the features of the independent claim. Further advantageous embodiments of the invention are indicated in the dependent claims. It should be noted that the features listed individually in the dependent claims can be combined with each other in any technologically useful way and define further embodiments of the invention. In addition, the features indicated in the claims are further specified and explained in the description, wherein further preferred embodiments of the invention are illustrated.

The present disclosure is directed to provide a sunroof, particularly a sunroof of a recreational vehicle. The recreational vehicle, often abbreviated as RV or named camper, caravan, mobile home, is a motor vehicle or trailer which includes living quarters designed for accommodation.

The sunroof has a fixable opening angle, including: a sunroof body which is composed of a top cover and a mounting frame and can be opened outwards, a supporting arm provided on the sunroof body for controlling an opening angle, and a sliding chute for cooperating with one end of the supporting arm for moving, wherein end parts of the top cover and the mounting frame are rotatably connected; a locking assembly is further provided at extreme ends, close to the sliding chute, of the top cover and the mounting frame; one end of the supporting arm is connected with the top cover, and the other end of the supporting arm is connected with the mounting frame; and
one end of the supporting arm is rotatably connected for changing a supporting angle of the supporting arm, the other end of the supporting arm is provided with a sliding member, the sliding member is assembled with the sliding chute provided on the sunroof body, the sliding chute is provided with a plurality of limiting slots, and the limiting slots are used for fixing a movement position of the sliding member.

One end of the top cover is connected with one end of the mounting frame by a hinge, and the other end of the top cover and the other end of the mounting frame are provided with the locking assembly for closing and locking the top cover and the mounting frame.

Preferably, both ends of the sliding member are provided with an elastic limiting member, and the elastic limiting member is composed of a spring column and a spring, and the spring column is assembled and connected with the sliding member via the spring.

Furthermore,the locking assembly includes a locking latch and a clamping hook respectively provided on the top cover and the mounting frame, and the clamping hook is provided at one end, away from the hinge, of the sliding chute, and the locking latch corresponds to the clamping hook.

Furthermore, the clamping hook includes a clamping lock provided at a top end of the clamping hook, a guide inclined plane provided on one side, away from the top end, of the clamping lock, and a reset spring adjacent to the guide inclined plane; and
the clamping hook is in an L-shape, a bending part of the clamping hook is configured to be assembled with the locking latch, and the guide inclined plane is provided at a section away from the bending part, and the guide inclined plane is used for cooperating with the sliding member to change a working state of the locking assembly.

In one embodiment, three limiting slots are provided on the sliding chute, respectively a first limiting slot for fixing an opening angle between the top cover and the mounting frame at 5°, a second limiting slot for fixing the opening angle between the top cover and the mounting frame at 50°, and a third limiting slot for fixing the opening angle between the top cover and the mounting frame at 0°.

In one embodiment, the sliding chute is provided on the mounting frame, one end of the supporting arm is rotatably connected with the top cover via a rotary shaft, and the other end of the supporting arm is provided with the sliding member which is slidably assembled on the mounting frame via the sliding chute.

According to another aspect of the disclosure, the use of a sunroof described for a of recreational vehicle (camper, caravan, mobile home) to permit lighting, sunshading, heat preservation, ventilation and/or air exchange is proposed. The sunroof comprises in particular a fixable opening angle, a sunroof body, a top cover, a mounting frame, a sliding chute with a plurality of limiting slots as well as a supporting arm with a sliding member as disclosed here.

The present disclosure has the following beneficial effects:
the sunroof provided in the present disclosure is simple in structure and easy to assemble and maintain, and by a stable triangular supporting structure, the stability of the sunroof in an opening state is improved.

In order to further describe the technical solutions in the embodiments of the present disclosure or the prior art more clearly, the accompanying drawings are briefly introduced below. It is apparent that the drawings described below are only some embodiments of the present disclosure.
Fig. 1 is an exploded diagram of a sunroof according to the present disclosure;
Fig. 2 is a schematic diagram of a sliding chute according to the present disclosure;
Fig. 3 is a schematic structural diagram of a sliding member according to the present disclosure;
Fig. 4 is schematic diagram of a locking assembly according to the present disclosure;
Fig. 5 is a schematic diagram of an opening state of the sunroof according to the present disclosure; and
Fig. 6 is a schematic diagram of a cross section of a limiting slot according to the present disclosure.

It should be noted that all directional indicators (such as up, down, left, right, front, rear, inner, outer, center) in the embodiments of the present disclosure are only used to explain the relative positional relationship, motion state, etc. between components at a specific attitude (as shown in the drawings), and if the specific attitude changes, the directional indicators change accordingly.

In the present disclosure, unless otherwise definitely specified and limited, terms "connect", "fix" and the like should be broadly understood. For example, "fix" may refer to fixed connection, and may also refer to detachable connection or integrated connection; "connect" may refer to mechanical connection, or electric connection; may refer to direct connection, or indirect connection implemented through a medium; and may further refer to internal communication of two components, or an interaction relationship between the two components, unless otherwise definitely limited. For those of ordinary skill in the art, specific meanings of the above terms in the present disclosure can be understood according to a specific condition.

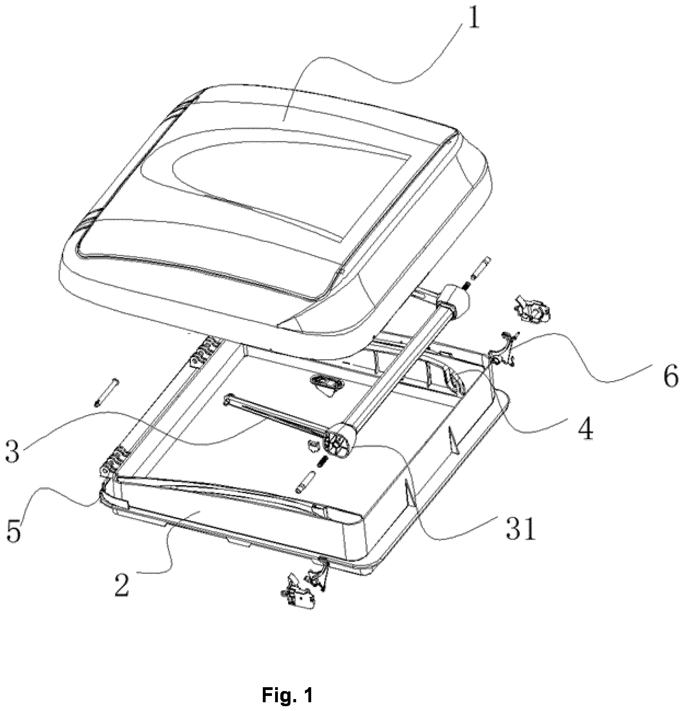

With reference to Figs. 1 to 3, a sunroof having a fixable opening angle includes: a sunroof body which is composed of a top cover 1 and a mounting frame 2 and can be opened outwards, a supporting arm 3 provided on the sunroof body for controlling an opening angle, and a sliding chute 4 for cooperating with one end of the supporting arm 3 for moving, wherein end parts of the top cover 1 and the mounting frame 2 are rotatably connected; a locking assembly 6 is further provided at extreme ends, close to the sliding chute 4, of the top cover 1 and the mounting frame 2; one end of the supporting arm 3 is connected with the top cover 1, and the other end of the supporting arm 3 is connected with the mounting frame 2; and
one end of the supporting arm 3 is rotatably connected for changing a supporting angle of the supporting arm 3, the other end of the supporting arm 3 is provided with a sliding member 31, the sliding member 31 is assembled with the sliding chute 4 provided on the sunroof body, the sliding chute 4 is provided with a plurality of limiting slots 40, and the limiting slots 40 are used for fixing a movement position of the sliding member 31.

Preferably, the sliding chute 4 is provided on the mounting frame 2, one end of the supporting arm 3 is rotatably connected with the top cover 1 via a rotary shaft, and the other end of the supporting arm 3 is provided with the sliding member 31 which is slidably assembled on the mounting frame 2 via the sliding chute 4. When one end, provided with the sliding member 31, of the supporting arm 3 slides in the sliding chute 4 of the mounting frame 2 to the limiting slot 40, the sliding member 31 is fixed by the limiting slot 40; a stable triangle structure is formed by the fixed supporting arm 3, the mounting frame 2, and the top cover 1; one end of the supporting arm 3 is fixedly connected with the top cover 1, the top cover 1 is fixedly connected with the mounting frame 2, and when the other end of the supporting arm 3 is fixed by the limiting slot 40, a triangle is formed; by the triangle, the opening angle between the top cover 1 and the mounting frame 2 can be adjusted along with the sliding of the sliding member 31 of the supporting arm 3; and by assembling the sliding member 31 with the limiting slot 40, the opening angle between the top cover 1 and the mounting frame 2 can be fixed until the next adjustment.

Preferably, one end of the top cover 1 is connected with one end of the mounting frame 2 via a hinge 5, and the other end of the top cover 1 and the other end of the mounting frame 2 are provided with the locking assembly 6 for locking the top cover 1 and the mounting frame 2 in a closing state.

Preferably, both ends of the sliding member 31 are provided with an elastic limiting member, and the elastic limiting member is composed of a spring column 311 and a spring 312, and the spring column 311 is assembled on the sliding member 31 via the spring 312. The spring column 311 applies a force to the sliding chute 4 via the spring 312, so that the spring column 311 is always attached into the sliding chute 4, and can be still attached into the limiting slot 40 when moving to a position where the limiting slot 40 is provided on the sliding chute 4, and then the top cover 1 can be better fixed.

Further preferably, the hinge 5 for connecting the top cover 1 and the mounting frame 2 may be any connecting structure that allows coaxial rotation between the top cover 1 and the mounting frame 2.

Preferably, the locking assembly 6 includes a clamping hook 61 and a locking latch 62, the clamping hook 61 is provided at one end, away from the hinge 5, of the mounting frame 2, the locking latch 62 is provided at one end, away from the hinge 5, of the top cover 1, and the locking latch 62 corresponds to the clamping hook 61.

Preferably, a third limiting slot 41 provided at an extreme end, away from the hinge 5, of the sliding chute 4 is of a hook-like structure by which the sliding member 31 closes and locks the top cover 1 and the mounting frame 2.

Further preferably, the clamping hook 61 includes a clamping lock 611 provided at a top end of the clamping hook 61, a guide inclined plane 612 provided on one side, away from the top end, of the clamping lock 611, and a reset spring 613 adjacent to the guide inclined plane 612; and
the clamping hook 61 is in an L-shape, a bending part of the clamping hook 61 is the clamping lock 611 which is configured to be assembled with the locking latch 62, and the guide inclined plane 612 is provided at one end away from the clamping lock 611, and the guide inclined plane 612 is used for cooperating with the sliding member 31 to change a working state of the locking assembly, the reset spring 613 is used for limiting the clamping hook 61, and is mainly used for making the guide inclined plane 612 always at a position where the spring column 311 can work normally so as to avoid jamming caused by an excessive movement of the guide inclined plane 612.

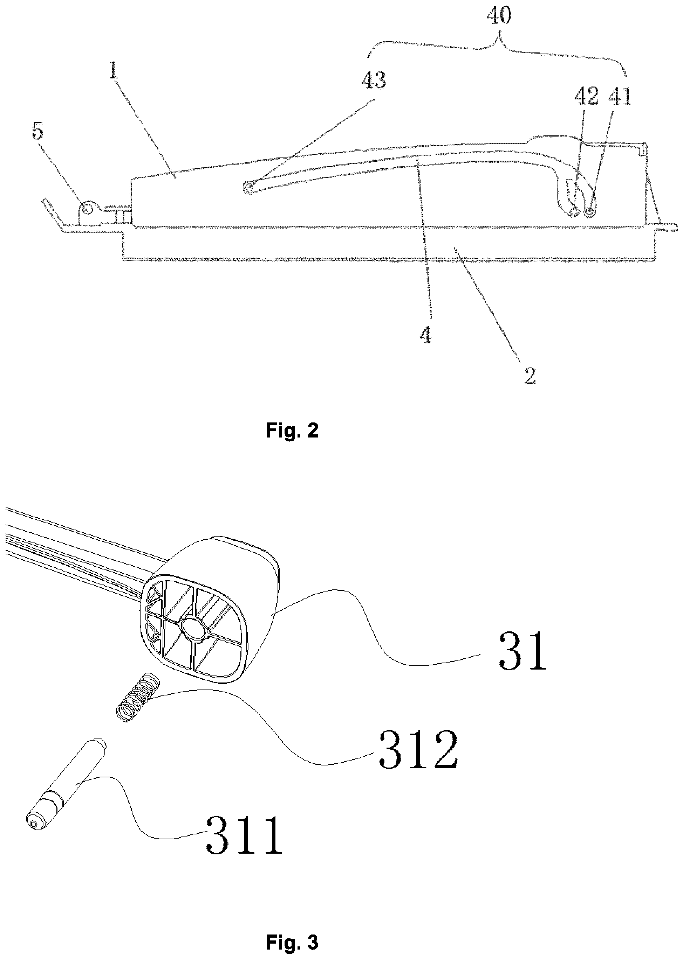

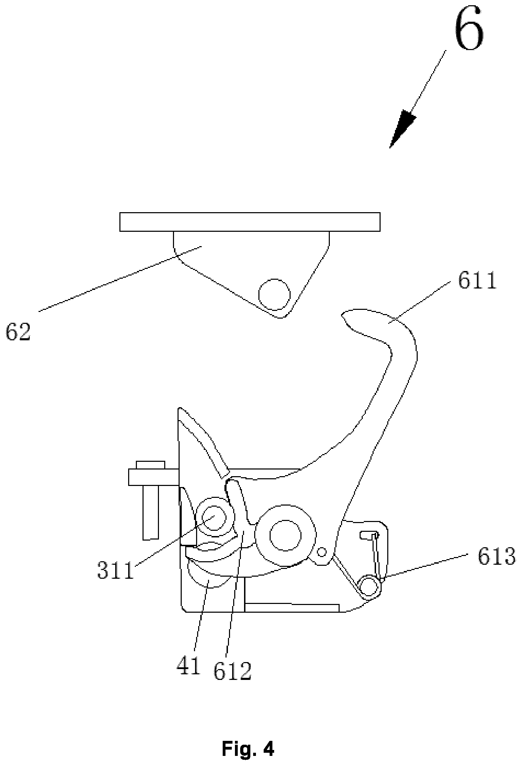

With reference to Figs. 3 and 4, specifically, the guide inclined plane 612 is in an L-shape, an angle of an L-shaped corner of the guide inclined plane 612 tends to be 90°. In the process of closing the sunroof, when the spring column 311 on the sliding member 31 moves via the sliding chute 4 to contact an edge at a bottom of the guide inclined plane 612, the edge which tends to be horizontal is changed to be vertical, and in this process, the clamping lock 611 approaches the locking latch 62 adjacently provided above the sliding member 31 until the spring column 311 falls into the third limiting slot 41 at the extreme end to realize locking. In the process of opening the sunroof, when the spring column 311 moves upwards in the sliding chute 4, the spring column 311 contacts the other edge at the bottom of the guide inclined plane 612, and the edge which tends to be horizontal is changed to be vertical; and when the spring column 311 comes out of the guide inclined plane 612 on the sliding chute 4, the clamping lock 611 moves away from the locking latch 62 to release the locking state.

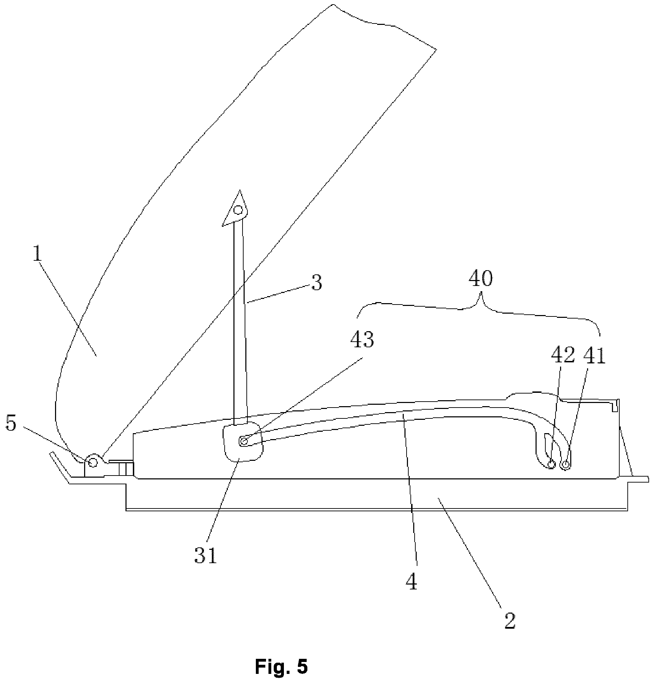

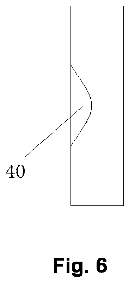

With reference to Figs. 2, 5 and 6, in one embodiment, three limiting slots 40 are provided on the sliding chute 4, respectively a first limiting slot 42 for fixing an opening angle between the top cover 1 and the mounting frame 2 at 5°, a second limiting slot 43 for fixing the opening angle between the top cover 1 and the mounting frame 2 at 50°, and the third limiting slot 41 for fixing the opening angle between the top cover 1 and the mounting frame 2 at 0°. An arc provided on the sliding chute 4 makes the sliding member 31 gradually change from an upward movement to a leftward movement.

Further preferably, the limiting slots 40 are in a tapered nest shape.

A working principle of the present disclosure is that:
the end parts of the top cover 1 and the mounting frame 2 can only rotate after being fixed; after one end of the supporting arm 3 is fixed with the top cover 1 or the mounting frame 2, the other end, provided with the sliding member 31, of the supporting arm 3 is limited in the sliding chute 4 via the limiting slots 40; the top cover 1, the mounting frame 2 and the supporting arm 3 form a triangular structure, and a distance from a connection point between the top cover 1 and the mounting frame 2 to a connection point between the supporting arm 3 and the top cover 1 or the mounting frame 2, and a length of the supporting arm 3 itself are fixed and unchanged; and however, the other end of the supporting arm 3 can move in the sliding chute via the sliding member 31 and is limited via the limiting slots 40, which is equivalent to the case where a length of one side of the triangle is variable. It can be seen according to the Pythagorean theorem that an inner angle of the triangle structure formed by the top cover 1, the mounting frame 2 and the supporting arm 3 varies with a change in a position of the end, provided with the sliding member 31, of the supporting arm 3 in the sliding chute 4.

However, by providing the spring column 311, the sliding member 31 can cooperate with the spring 312 to better fix the top cover 1 when falling into the limiting slots 40. The top cover 1 can be opened at different angles by providing a plurality of limiting slots.

Opening and closing between the clamping hook 61 and the locking latch 62 can be achieved by the movement of the spring column 311 at the tail end of the sliding chute 4 and cooperation of the guide inclined plane 612 on the clamping hook 61.

The above shows and describes the basic principle, main characteristics, and advantages of the present disclosure. Those skilled in the art should know that the present disclosure is not limited to the above embodiments. Only the principle of the present disclosure is described in the above embodiments and the specification.

## Claims

1. Sunroof having a fixable opening angle, comprising: a sunroof body which is composed of a top cover (1) and a mounting frame (2) and can be opened outwards, a supporting arm (3) provided on the sunroof body for controlling an opening angle, and a sliding chute (4) for cooperating with one end of the supporting arm (3) for moving, wherein end parts of the top cover (1) and the mounting frame (2) are rotatably connected; one end of the supporting arm (3) is connected with the top cover (1), and the other end of the supporting arm (3) is connected with the mounting frame (2); and
one end of the supporting arm (3) is rotatably connected for changing a supporting angle of the supporting arm (3), the other end of the supporting arm (3) is provided with a sliding member (31), the sliding member (31) is assembled with the sliding chute (4) provided on the sunroof body, the sliding chute (4) is provided with a plurality of limiting slots (40), and the limiting slots (40) are used for fixing a movement position of the sliding member (31),
wherein one end of the top cover (1) is connected with one end of the mounting frame (2) by a hinge (5), and the other end of the top cover (1) and the other end of the mounting frame (2) are provided with a locking assembly (6) for closing and locking the top cover (1) and the mounting frame (2),
wherein the locking assembly (6) comprises a locking latch (62) and a clamping hook (61), **characterized in that** the locking latch (62) and the clamping hook (61) are respectively provided on the top cover (1) and the mounting frame (2), and the clamping hook (61) is provided at one end, away from the hinge (5), of the sliding chute (4), and the locking latch (62) corresponds to the clamping hook (61), wherein
the clamping hook (61) comprises a clamping lock (611) provided at a top end of the clamping hook (61), a guide inclined plane (612) provided on one side, away from the top end, of the clamping lock (611), and a reset spring (613) adjacent to the guide inclined plane (612); and
the clamping hook (61) is in an L-shape, a bending part of the clamping hook (61) is configured to be assembled with the locking latch (62), and the guide inclined plane (612) is provided at a section away from the bending part, and the guide inclined plane (612) is used for cooperating with the sliding member (31) to change a working state of the locking assembly (6).

2. Sunroof having a fixable opening angle according to claim 1, wherein both ends of the sliding member (31) are provided with an elastic limiting member, and the elastic limiting member is composed of a spring column (311) and a spring (312), and the spring column (311) is assembled and connected with the sliding member (31) via the spring (312).

3. Sunroof having a fixable opening angle according to any one of the preceding claims, wherein three limiting slots (40) are provided on the sliding chute (4), respectively a first limiting slot (42) for fixing an opening angle between the top cover (1) and the mounting frame (2) at 5°, a second limiting slot (43) for fixing the opening angle between the top cover (1) and the mounting frame (2) at 50°, and a third limiting slot (41) for fixing the opening angle between the top cover (1) and the mounting frame (2) at 0°.

4. Sunroof having a fixable opening angle according to any one of the preceding claims, wherein the sliding chute (4) is provided on the mounting frame (2), one end of the supporting arm (3) is rotatably connected with the top cover (1) via a rotary shaft, and the other end of the supporting arm (3) is provided with the sliding member (31) which is slidably assembled on the mounting frame (2) via the sliding chute (4).

## Patentansprüche

1. Sonnendach aufweisend einen fixierbaren Öffnungswinkel, umfassend:
einen Sonnendachkörper, der zusammengesetzt ist aus einer oberen Abdeckung (1) und einem Montagerahmen (2) und nach außen hin geöffnet werden kann, einen Tragarm (3) bereitgestellt auf dem Sonnendachkörper zum Kontrollieren eines Öffnungswinkels, und eine Gleitrinne (4) um mit einem Ende des Tragarms (3) zusammenzuwirken zum Bewegen, wobei Abschlussteile der oberen Abdeckung (1) und der Montagerahmen (2) rotierbar miteinander verbunden sind; ein Ende des Tragarms (3) ist verbunden mit der oberen Abdeckung (1) und das andere Ende des Tragarms (3) ist verbunden mit dem Montagerahmen (2); und
ein Ende des Tragarms (3) ist rotierbar verbunden zum Ändern eines Tragwinkels des Tragarms (3), das andere Ende des Tragarms (3) ist ausgestattet mit einem Gleitteil (31), das Gleitteil (31) ist verbunden mit der Gleitrinne (4), die auf dem Sonnendachkörper angeordnet ist, die Gleitrinne (4) ist ausgestattet mit einer Mehrzahl von Limitierungsschlitzen (40), und die Limitierungsschlitze (40) werden genutzt um eine Bewegungsposition des Gleitteils (31) zu fixieren,
wobei ein Ende der oberen Abdeckung (1) mit einem Ende des Montagerahmens (2) über ein Scharnier (5) verbunden ist, und das andere Ende der oberen Abdeckung (1) und das andere Ende des Montagerahmens (2) mit einem Schließmechanismus (6) ausgestattet sind zum Schließen und Abschließen der oberen Abdeckung (1) und des Montagerahmens (2),
wobei der Schließmechanismus (6) einen Schließriegel (62) und einen Klemmhaken (61) umfasst, **dadurch gekennzeichnet, dass** der Schließriegel (62) und der Klemmhaken (61) jeweils auf der oberen Abdeckung (1) und dem Montagerahmen (2) angeordnet sind, und der Klemmhaken (61) entfernt von dem Scharnier (5) auf der Gleitrinne (4) angeordnet ist und der Schließriegel (62) auf den Klemmhaken (61) abgestimmt ist,
wobei der Klemmhaken (61) ein Klemmschloss (611) umfasst, das an einem oberen Ende des Klemmhakens (61) angeordnet ist, eine an einer Seite des Klemmschlosses (611) entfernt von dem oberen Ende angeordnete ansteigende Führungsebene (612) umfasst und eine Rückholfeder (613) neben der ansteigenden Führungsebene (612) umfasst; und
der Klemmhaken (61) L-förmig ist, ein gebogener Teil des Klemmhakens (61) ist ausgestattet um mit dem Schließriegel (62) zusammengesetzt zu werden, und die ansteigende Führungsebene (612) ist angeordnet an einem Bereich entfernt von dem gebogenen Teil, und die ansteigende Führungsebene (612) wird genutzt für ein Zusammenwirken mit dem Gleitteil (31) zum Ändern eines Arbeitszustands des Schließmechanismus (6).

2. Sonnendach aufweisend einen fixierbaren Öffnungswinkel nach Anspruch 1, wobei beide Enden des Gleitteils (31) mit einem elastischen Sperrglied ausgestattet ist, und das elastische Sperrglied zusammengesetzt ist aus einer Federstütze (311) und einer Feder (312), und die Federstütze (311) verbaut und verbunden ist mit dem Gleitteil (31) über die Feder (312).

3. Sonnendach aufweisend einen fixierbaren Öffnungswinkel nach einem der vorhergehenden Ansprüche, wobei drei Limitierungsschlitze (40) auf der Gleitrinne (4) angeordnet sind, jeweils ein erster Limitierungsschlitz (42) zum Fixieren eines Öffnungswinkels zwischen der oberen Abdeckung (1) und dem Montagerahmen (2) bei 5°, ein zweiter Limitierungsschlitz (43) zum Fixieren des Öffnungswinkels zwischen der oberen Abdeckung (1) und dem Montagerahmen (2) bei 50° und ein dritter Limitierungsschlitz (41) zum Fixieren eines Öffnungswinkels zwischen der oberen Abdeckung (1) und dem Montagerahmen (2) bei 0°.

4. Sonnendach aufweisend einen fixierbaren Öffnungswinkel nach einem der vorhergehenden Ansprüche, wobei die Gleitrinne (4) an dem Montagerahmen (2) vorgesehen ist, ein Ende des Tragarms (3) rotierbar verbunden mit der oberen Abdeckung (1) über einen drehbaren Schaft ist, und das andere Ende des Tragarms (3) ausgestattet ist, mit dem Gleitteil (31), das gleitfähig mit dem Montagerahmen (2) zusammengesetzt ist über die Gleitrinne (4).

## Revendications

1. Toit ouvrant ayant un angle d'ouverture fixable, comprenant : un corps de toit ouvrant qui est composé d'un couvercle supérieur (1) et d'un cadre de montage (2) et peut être ouvert vers l'extérieur, un bras de support (3) prévu sur le corps de toit ouvrant pour commander un angle d'ouverture, et une glissière de coulissement (4) destinée à coopérer avec une extrémité du bras de support (3) pour mouvement, dans lequel des parties d'extrémité du couvercle supérieur (1) et du cadre de montage (2) sont reliées de façon rotative ; une extrémité du bras de support (3) est reliée au couvercle supérieur (1), et l'autre extrémité du bras de support (3) est reliée au cadre de montage (2) ; et
une extrémité du bras de support (3) est reliée de façon rotative pour changer un angle de support du bras de support (3), l'autre extrémité du bras de support (3) est pourvue d'un élément de coulissement (31), l'élément de coulissement (31) est assemblé avec la glissière de coulissement (4) prévue sur le corps de toit ouvrant, la glissière de coulissement (4) est pourvue d'une pluralité de fentes de limitation (40), et les fentes de limitation (40) sont utilisées pour fixer une position de mouvement de l'élément de coulissement (31),
dans lequel une extrémité du couvercle supérieur (1) est reliée à une extrémité du cadre de montage (2) par une charnière (5), et l'autre extrémité du couvercle supérieur (1) et l'autre extrémité du cadre de montage (2) sont pourvues d'un ensemble de verrouillage (6) pour fermer et verrouiller le couvercle supérieur (1) et le cadre de montage (2),
dans lequel l'ensemble de verrouillage (6) comprend un loquet de verrouillage (62) et un crochet de serrage (61), **caractérisée en ce que** le loquet de verrouillage (62) et le crochet de serrage (61) sont respectivement prévus sur le couvercle supérieur (1) et le cadre de montage (2), et le crochet de serrage (61) est prévu à une extrémité, éloignée de la charnière (5), de la glissière de coulissement (4), et le loquet de verrouillage (62) correspond au crochet de serrage (61),
dans lequel
le crochet de serrage (61) comprend un verrou de serrage (611) prévu à une extrémité supérieure du crochet de serrage (61), un plan incliné de guidage (612) prévu sur un côté, éloigné de l'extrémité supérieure, du verrou de serrage (611), et un ressort de réenclenchement (613) adjacent au plan incliné de guidage (612) ; et
le crochet de serrage (61) est en forme de L, une partie courbée du crochet de serrage (61) est configurée pour être assemblée avec le loquet de verrouillage (62), et le plan incliné de guidage (612) est prévu dans une section éloignée de la partie courbée, et le plan incliné de guidage (612) est utilisé pour coopérer avec l'élément de coulissement (31) pour changer un état de fonctionnement de l'ensemble de verrouillage (6).

2. Toit ouvrant ayant un angle d'ouverture fixable, selon la revendication 1, dans lequel les deux extrémités de l'élément de coulissement (31) sont pourvues d'un élément de limitation élastique, et l'élément de limitation élastique est composé d'une colonne de ressort (311) et d'un ressort (312), et la colonne de ressort (311) est assemblée avec, et reliée à, l'élément de coulissement (31) par l'intermédiaire du ressort (312).

3. Toit ouvrant ayant un angle d'ouverture fixable, selon l'une quelconque des revendications précédentes, dans lequel trois fentes de limitation (40) sont prévues sur la glissière de coulissement (4), respectivement une première fente de limitation (42) pour fixer un angle d'ouverture entre le couvercle supérieur (1) et le cadre de montage (2) à 5 °, une deuxième fente de limitation (43) pour fixer l'angle d'ouverture entre le couvercle supérieur (1) et le cadre de montage (2) à 50 °, et une troisième fente de limitation (41) pour fixer l'angle d'ouverture entre le couvercle supérieur (1) et le cadre de montage (2) à 0 °.

4. Toit ouvrant ayant un angle d'ouverture fixable, selon l'une quelconque des revendications précédentes, dans lequel la glissière de coulissement (4) est prévue sur le cadre de montage (2), une extrémité du bras de support (3) est reliée de façon rotative au couvercle supérieur (1) par l'intermédiaire d'un arbre rotatif, et l'autre extrémité du bras de support (3) est pourvue de l'élément de coulissement (31) qui est assemblé de façon coulissante sur le cadre de montage (2) par l'intermédiaire de la glissière de coulissement (4).
